Europäisches Patentamt

European Patent Office

Office européen des brevets

(19)

(11) Publication number: **0 050 469**
**B1**

(12) **EUROPEAN PATENT SPECIFICATION**

(45) Date of publication of patent specification: **12.03.86**

(21) Application number: **81304773.5**

(22) Date of filing: **13.10.81**

(51) Int. Cl.⁴: **F 16 L 11/11**

(54) **Flexible hose.**

(30) Priority: **22.10.80 GB 8034064**

(43) Date of publication of application:
**28.04.82 Bulletin 82/17**

(45) Publication of the grant of the patent:
**12.03.86 Bulletin 86/11**

(84) Designated Contracting States:
**AT BE CH DE FR GB IT LI LU NL SE**

(56) References cited:
**DE-C- 347 773**
**DE-C- 620 372**
**FR-A- 698 708**
**US-A-2 920 656**

(73) Proprietor: **STANDARD HOSE LIMITED**
**Owler Ings Mill Owler Ings Road**
**Brighouse West Yorkshire HD6 1EJ (GB)**

(72) Inventor: **Whitworth, Barrie Finbarr**
**Lower Green House Hove Edge**
**Brighouse West Yorkshire (GB)**

(74) Representative: **Wharton, Peter Robert et al**
**Urquhart-Dykes & Lord 11th Floor Tower House**
**Merrion Way**
**Leeds, LS2 8PB West Yorkshire (GB)**

EP 0 050 469 B1

Courier Press, Leamington Spa, England.

## Description

This invention relates to improved flexible hose and in particular relates to a flexible hose having improved resistance to crushing.

Reinforced flexible hosepipes in general comprise a plastics material or rubber tube reinforced with internal of external helically wound wire. Such a hose is flexible and able to withstand high internal pressures, and furthermore has a degree of crush resistance afforded by the reinforcing wire. However, if it is desired to increase the crush resistance for certain applications then hitherto it has been the practice to use a heavier gauge wire reinforcement or space the helical wire windings closer together. Both of these solutions increase the weight of the hose and generally lower its flexibility.

The invention seeks to provide a reinforced plastics material hose of high resistance to crushing which does not suffer from the above drawbacks.

DE—C—347773 relates to hoses made entirely from metal by winding metal bands together and welding them at their edges to 'stays". These stays intersect or pass through the actual hose wall and are welded to the hose wall to form a continuous joint or seal. While such pipes are no doubt more flexible than plain metal tubes they are not in the same class as the reinforced, helically convoluted, plastics material hoses to which the present invention relates and which are extremely light and flexible and can, for example, be bent through angles of 180° without difficulty and with relatively small radius.

US—A—2920656 relates to a different field, namely bellows joints, which in use have repeatedly to expand and contract. The object of the invention here is to provide bellows having a greater pressure-temperature operating range. This is achieved by providing annular discs which limit the distortion of the bellows when subjected to abnormally high internal pressures and therefore help prevent failure under these conditions. This is quite different both from the above German references, and from the hoses forming the subject matter of the present invention which are increasingly commonly used in applications where lightness and flexibility are advantageous, for example for the filling and emptying of road tankers. Under these conditions the internal pressures to which the hoses are exposed are not excessive and so the problems which the US reference is seeking to overcome are not present. However, it can sometimes happen that the tanker, or another vehicle runs over the hosepipe and, with hitherto available hoses, this would result in crushing of the pipe flat, interruption of the fluid flow, possible rupture of the pipe wall, and permanent deformation of the wire reinforcing resulting in a subsequent weakness in the hose. As pointed out above, the conventional answer to such problems has been to increase the heaviness and/or the spacing of the wire reinforcement, or provide external armouring, all of which solutions increase both the cost and weight of the hose while lowering its flexibility. The solution of the present invention is extremely simple and elegant: by the provision of reinforcement strip having the cross section specified a useful increase in crush resistance (that is external resistance to external crushing forces) can be obtained without greatly increasing the weight of the hose or its cost, and without in any way lowering its flexibility.

According to the present invention there is provided a hose as defined in claim 1 hereof.

The hoses to which the invention relates are helically convoluted hoses, that is hollow tubes which have been formed with helical contours on the outside surfaces and corresponding helical contours on the inside surfaces such that the tube wall will appear, in longitudinal section, to have a regular undulating wave form. This wave formed may be, for example, sine wave form, saw-tooth wave or square wave. Furthermore, the helical convolutions may originate from a single point or more than one point.

The profiled strip may be, for example, of a tough resilient plastics material but is preferably of a metal, such as steel, and may be a steel wire.

The helical windings of a tube according to the invention may be internally of the tube or externally, preferably the latter, or both. Furthermore, the windings of wire having a cross-section according to the invention may be employed either along or together with further windings of wire having a conventional cross-section.

The tube of the hose of the invention is preferably made from a relatively rigid plastics material such as polytetrafluoroethylene, polypropylene, polyamide, unplasticised polyvinylchloride, and the like plastics materials, although plastics less rigid in nature such as plasticised polyvinylchloride may be used. Bonding the helical reinforcing profiled strips of the invention to or within the tube is avoided; nor need the tube be held entrapped between internal and external wires as with conventional rubber and flexible plastics hose.

The invention will be described further, by way of example, with reference to the accompanying drawings, in which:—

Figure 1 is a diagrammatic view, in half section of a hose-pipe constructed according to the invention;

Figure 2 is a similar view to Figure 1 of another embodiment of the invention;

Figure 3 is a similar view to Figure 1 of a third embodiment of the invention;

Figure 4 is a partial view of a fourth embodiment of the invention; and

Figures 5a and b are cross-sections of reinforcing wires suitable for use in the hose of the invention.

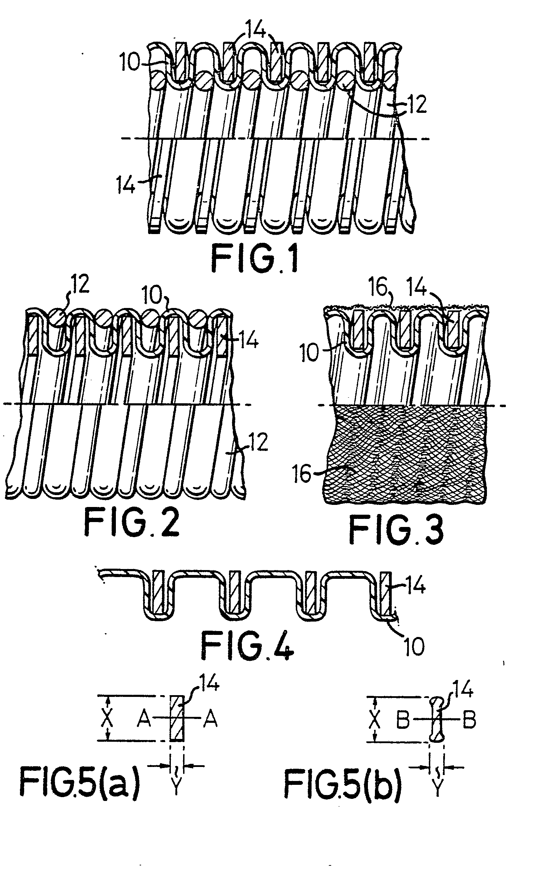

Referring to the drawings, a length of hose-pipe according to the invention is shown in Figure 1 in which a convoluted plastics material tube 10 has conventional round section internal reinforcing wire 12 within its internal convolution. An external helically wound profiled strip, in this case a reinforcing wire 14, has a cross-section illustrated in Figure 5a, that is the thickness of the wire in the radial direction is greater than the thickness of the wire in the axial direction.

In Figure 2 it can be seen that the profiled strip reinforcing wire 14 according to the invention is internally of the tube 10 and conventional reinforcing wire 12 is located externally.

Figure 3 illustrates a hose with outer reinforcement for example braiding 16. The reinforcing wire according to the invention 14 is externally of the tube 10.

In Figure 4 the profiled strip of the invention 14 is held in position by the shape of the helically convoluted tube section 10 and this allows a wider spacing between successive windings of the strip 14 thus enabling a lightweight crush resistant hose to be made.

Figures 5a and 6 illustrate preferred cross-sections of the profiled strip 14. The dimension Y will, in use in a hose, be generally in the axial direction, and the dimension X will be generally in the radial direction. To obtain the benefits of the invention, the dimension X should be greater than the dimensions Y. This ensures that the second moment of area of the cross-section with respect to the transverse axis A—A (Figure 5a) or B—B (Figure 5b) passing through the centre of area is greater than the second moment of area with respect to any other neutral axis. Axis A—A or B—B is, of course, substantially parallel to the longitudinal axis of the convoluted tube. In Figure 5b a modified cross-section of the wire 14 is shown in which rounded ends and radiused corners are provided so as to prevent manufacture thereof or during service after manufacture.

A hose constructed according to the invention has superior crush resistance properties when compared with a hose of the same weight constructed in the conventional manner. It has been found that the crush resistance can be increased by a factor of two or more in accordance with the invention. Furthermore, the ease of flexing the finished product to a specific radius is improved in comparison with a similar hose of the same weight employing conventional round section wire reinforcement. A hose in accordance with the invention may, for example, be run over by a loaded bulk liquid road tanker and it would not only resist damage but will not be crushed or flattened. Thus there will be no interruption to the flow of liquid within the hose.

## Claims

1. A flexible hose which comprises a flexible helically convoluted tube (10) of a plastics material wound helically with a reinforcing strip (14), characterised in that the strip (14) is profiled to a non-circular cross-section such that the second moment of area of the cross-section with respect to a neutral axis, substantially parallel to the longitudinal axis of the convoluted tube, is greater than the second moment of area with respect to any other neutral axis of the cross-section, and the strip (14) not forming part of or being adhered to the flexible tube (10).

2. A tube as claimed in claim 1 in which the helical windings (14) are externally of the tube (10).

3. A flexible hose as claimed in claim 1 or 2 in which the helical windings (14) are internally of the tube (10).

4. A flexible hose as claimed in any one of claims 1 to 3 in which the tube (10) is made from a relatively rigid plastics material.

5. A flexible hose as claimed in claim 4 in which the plastics material is polytetrafluoroethylene, polypropylene, polyamide or unplasticised polyvinylchloride.

6. A flexible hose as claimed in any one of claims 1 to 5 in which the strip (14) is provided with rounded ends and radiussed corners to prevent and reduce damage to the tube during manufacture or during service.

7. A flexible hose as claimed in any of claims 1 to 6 in which the strip (14) is a steel wire.

8. A flexible hose as claimed in any of claims 1 to 7 in which thickness of the strip (14) in the radial direction at any point on the tube (10) exceeds the thickness in the axial direction.

## Patentansprüche

1. Biegsamer Schlauch mit einem biegsamen, schraubenförmig gewundenen Rohr (10) aus einem Kunststoffmaterial, das schraubenförmig mit einem Verstärkungsstreifen (14) gewickelt ist, dadurch gekennzeichnet, daß der Streifen (14) derart zu einer nicht-kreisförmigen Querschnittsform profiliert ist, daß die zweite Momentenfläche des Querschnitts bezüglich einer neutralen Achse, die im wesentlichen parallel zur Längsachse des gewundenen Rohres verläuft, größer ist als die zweite Momentenfläche bezüglich jeder anderen neutralen Achse des Querschnitts, und daß der Streifen (14) keinen Teil des biegsamen Rohres (10) bildet und nicht daran angeklebt ist.

2. Rohr nach Anspruch 1, dadurch gekennzeichnet, daß die schraubenförmigen Windungen (14) sich außen an dem Rohr (10) befinden.

3. Biegsamer Schlauch nach Anspruch 1 oder 2, dadurch gekennzeichnet, daß sich die Schraubenförmigen Windungen (14) innerhalb des Rohres (10) befinden.

4. Biegsamer Schlauch nach einem der Ansprüche 1 bis 3 dadurch gekennzeichnet, daß das Rohr (10) aus einem relativ starren Kunststoffmaterial hergestellt ist.

5. Biegsamer Schlauch nach Anspruch 4, dadurch gekennzeichnet, daß das Plastikmaterial Polytetrafluoräthylen, Polypropylen, Polyamid oder weichmacherfreies Polyvinylchlorid ist.

6. Biegsamer Schlauch nach einem der Ansprüche 1 bis 5, dadurch gekennzeichnet, daß der Streifen (14) mit abgerundeten Enden und gewölbten Ecken versehen ist, um eine Beschädigung des Rohres während der Herstellung oder des Gebrauchs zu verhindern oder zu verringern.

7. Biegsamer Schlauch nach einem der Ansprüche 1 bis 6, dadurch gekennzeichnet, daß der Streifen (14) ein Stahldraht ist.

8. Biegsamer Schlauch nach einem der Ansprüche 1 bis 7, dadurch gekennzeichnet, daß die Dicke des Streifens (14) in radialer Richtung an jedem Punkt des Rohres (10) die Dicke in axialer Richtung übersteigt.

## Revendications

1. Tuyau flexible qui comprend un tube flexible (10) à convolutions hélicoïdales, en matière plastique, comportant une bande de renforcement (14) enroulée hélicoïdalement, caractérisée en ce que la bande (14) présente une section transversale non circulaire telle que le moment d'inertie de la section transversale, par rapport à un axe neutre sensiblement parallèle à l'axe longitudinal du tube à convolutions, est supérieur au moment d'inertie de la section transversale par rapport à tout autre axe neutre de cette section, la bande (14) ne faisant pas partie du tube flexible (10) ou n'étant pas liée à celui-ci.

2. Tube suivant la revendication 1, dans lequel les enroulements hélicoïdaux (14) sont à l'extérieur du tube (10).

3. Tuyau flexible suivant la revendication 1 ou 2, dans lequel les enroulements hélicoïdaux (14) sont à l'intérieur du tube (10).

4. Tuyau flexible suivant l'une quelconque des revendications 1 à 3, dans lequel le tube (10) est en matière plastique relativement rigide.

5. Tuyau flexible suivant la revendication 4, dans lequel la matière plastique est polytétrafluoroéthylène, polypropylène, polyamide ou chlorure de polyvinyle non plastifié.

6. Tuyau flexible suivant l'une quelconque des revendications 1 à 5, dans lequel la bande (14) comporte des extrémités arrondies et des angles à rayon, pour éviter et réduire la détérioration du tube pendant la fabrication ou pendant l'utilisation.

7. Tuyau flexible suivant l'une quelconque des revendications 1 à 6, dans lequel la bande (14) est un fil d'acier.

8. Tuyau flexible suivant l'une quelconque des revendications 1 à 7, dans lequel l'épaisseur de la bande (14) dans la direction axiale en tout point du tube (10) dépasse l'épaisseur dans la direction axiale.

FIG.1

FIG.2

FIG.3

FIG.4

FIG.5(a)

FIG.5(b)